# EUROPÄISCHE PATENTSCHRIFT

(11) **EP 0 975 887 B1**
(45) Veröffentlichungstag und Bekanntmachung des Hinweises auf die Patenterteilung: **25.06.2003**
(21) Anmeldenummer: 98902995.4
(22) Anmeldetag: 10.01.1998
(51) Int. Cl.: F16D 65/092

(54) **SCHEIBENBREMSE, SOWIE BREMSBACKENSATZ FÜR EINE SCHEIBENBREMSE**
DISK BRAKE AND BRAKE SHOE SET FOR A DISK BRAKE
FREIN A DISQUE ET JEU DE SEGMENTS DE FREIN POUR FREIN A DISQUE

(30) Priorität: 24.04.1997 DE 19717393
(43) Veröffentlichungstag der Anmeldung: 02.02.2000
(73) Patentinhaber: TMD Friction GmbH, 51381 Leverkusen (DE)
(72) Erfinder: BRECHT, Jörg-Dieter, D-57234 Wilusdorf (DE); OEHL, Karl-Heinz, D-50765 Köln (DE)
(74) Vertreter: Dallmeyer, Georg, Dipl.-Ing.
(86) Internationale Anmeldenummer: EP9800118
(87) Internationale Veröffentlichungsnummer: WO98048193

(56) Entgegenhaltungen:
- US-A- 4 705 146
- US-A- 5 145 037
- US-A- 5 535 859

## Beschreibung

Die Erfindung betrifft einen Bremsbackensatz für eine Scheibenbremse nach dem Obergriff des Anspruchs 1 bzw. eine Scheibenbremse mit einem derartigen Bremsbackensatz.

Derartige Scheibenbremsen werden im Kraftfahrzeugbereich benötigt. Dabei ist es bekannt, die auf den Trägerplatten der Bremsbacken befestigten Reibbeläge mit Schrägflächen - also mit nicht parallel zur Bremsscheibe oder zur Trägerplatte verlaufenden Oberflächen - zu gestalten.

Die beiderseits der Bremsscheibe angeordneten Bremsbacken haben dabei eine spiegelbildliche Anordnung der Schrägflächen der Reibbelagflächen.

Scheibenbremsen stellen komplexe schwingungsfähige Systeme dar, die durch die in den Kontaktflächen zwischen den Reibbelägen und der Bremsscheibe wirkenden Reibkräfte zu Schwingungen angeregt werden.

Eines dieser Schwingungsprobleme ist das sogenannte Bremsenknarzen. Dieses besteht aus niederfrequenten Schwingungen im Frequenzbereich von ca. 20 bis 150 Hz, die beim Übergang vom Haften zum Reiben sowie bei extrem niederiger Fahrzeuggeschwindigkeit entstehen. Das Bremsenknarzen tritt insbesondere bei hochmotorisierten Fahrzeugen mit Automatikgetriebe aufgrund des ständig an der Antriebswelle anstehenden Antriebsmomentes auf.

Seit einigen Jahren nehmen Schwingungsprobleme im Automobilbau stetig zu. Eine Ursache dafür ist die konsequente Umsetzung von Leichtbau- und Kostenreduzierungskonzepten. Andererseits steigt der Komfortanspruch der Fahrzeugkäufer und damit die Anforderungen zur Vermeidung als unangenehm empfundener Fahrzeuggeräusche.

Für die Entstehung von Knarzen wird der sogenannte Slipstickeffekt verantwortlich gemacht. Der Slipstickeffekt beschreibt das abwechselnde Haften und Gleiten der Reibbeläge auf der Bremsscheibe.

Im Fahrzeug tritt Knarzen in zwei unterschiedlichen Situationen auf. Im Fahrzeug tritt Knarzen in zwei unterschiedlichen Situationen auf. Das Lösen der Fahrzeugbremse bei anliegendem Antriebsmoment stellt einen typischen Fall dar, der häufig bei hochmotorisierten Fahrzeugen mit Automatikgetriebe auftritt. Wirkt ein Antriebsmoment an der Antriebswelle während das Fahrzeug mit betätigter Bremse still steht, so kann durch langsames Lösen der Bremse ein deutlich wahrzunehmendes Knacken oder sogar ein durchdringendes Brummen auftreten. Das Antriebsmoment muß dabei nicht unbedingt vom Motor erzeugt werden, es kann auch von einer Hangabtriebskraft herrühren. Auch in diesem Fall knarzt die Bremse, wenn sie langsam gelöst wird und ein bestimmter kritischer Anpreßdruck der Bremsbeläge erreicht wird. Das beschriebene Brummen kann bei gleichmäßiger, langsamer Fahrzeugbewegung und konstantem Anpreßdruck über längere Zeiträume auftreten.

Auch beim Abbremsen des Fahrzeuges von höheren Geschwindigkeiten, kann unmittelbar vor dem Anhalten beim Übergang von Reiben zu Haften ein kurzes Knacken wahrgenommen werden.

Aus der US 5,145,037 ist eine Scheibenbremse bzw. ein Bremsbakkensatz bekannt, mit zwei gegenüberliegenden beiderseits einer Bremsscheibe angeordneten Bremsbacken, die zum Bremsen an die Bremsscheibe anpressbar sind, bei der die Bremsbacken aus einer Trägerplatte und einer darauf angeordneten Reibbelagschicht bestehen. Die beiderseits einer Bremsscheibe gegenüberliegend angeordneten Reibbelagschichten weisen in Tangentialrichtung gesehen einen mittleren Bereich gleicher Schichtstärke und an mindestens einem Ende der Bremsbacken einen Bereich verminderter Schichtstärke auf, wobei die Schichtstärke in Tangentialrichtung nach außen abnimmt. Die Trennungslinie zwischen dem mittleren Bereich gleicher Schichtstärke und den Bereichen verminderter Schichtstärke verläuft in den Reibbelägen beiderseits der Bremsscheibe spiegelsymmetrisch zueinander.

Auf diese Weise werden von beiden Seiten der Bremsscheibe identische Reibungsschwingungen in die Bremsscheibe induziert, so dass sich die niederfrequenten Schwingungen verstärken können.

Der Erfindung liegt die Aufgabe zugrunde, einen Bremsbackensatz für eine Scheibenbremse zu schaffen, mit denen die Entstehung von tieffrequenten Geräuschen vermieden werden soll.

Zur Lösung dieser Aufgabe dienen die Merkmale des Anspruchs 1 bzw. 7.

Die Erfindung sieht in vorteilhafter Weise vor, daß die Reibbeläge der Bremsbacken Bereiche verminderter Schichtstärke aufweisen, die nicht spiegelbildlich relativ zur Bremsscheibe in den Bremsbacken angeordnet sind. Da die Reibbeläge relativ zu einer in der Bremsscheibe liegenden Ebene nicht spiegelsymmetrisch angeordnet sind, sind die Reibkräfte beiderseits der Bremsscheibe unterschiedlich, wodurch beiderseits der Bremsscheibe unterschiedliche Schwingungen induziert werden, die die Selbsterregung der Schwingung behindern und somit das Auftreten niederfrequenter Schwingungen im Frequenzbereich bis 150 Hz unterdrücken und insbesondere Resonanzerscheinungen verhindern.

Die abgeschrägten Reibbeläge sind derart gestaltet, daß die Bereiche verminderter Schichtstärke eine schräg in Richtung auf die Trägerplatten abfallende Oberfläche haben und beispielsweise unter einem Winkel von ca. 10 bis 45° zur Trägerplatte tangential nach außen in Richtung auf die Trägerplatte abfallen.

Die Trennungslinie zwischen den Bereichen der Reibbelagschicht mit gleicher Schichtstärke zu den Bereichen mit verminderter Schichtstärke kann parallel zu der in Radialrichtung der Bremsscheibe verlaufenden Symmetrielinie der Bremsbacke oder unter einem Winkel zu dieser Symmetrielinie verlaufen. Der Winkel zu dieser Symmetrielinie kann im Bereich von ± 0 bis 60°, vorzugsweise im Bereich zwischen ± 10 und 30°, liegen.

Beispielsweise ist bei gegenüberliegenden Bremsbackenpaaren vorgesehen, daß diese Trennungslinie beiderseits der Bremsscheibe gegenläufig und somit nicht spiegelsymmetrisch verläuft.

Weitere vorteilhafte Ausführungsformen sind den Unteransprüchen zu entnehmen.

Im folgenden werden unter Bezugnahme auf die Zeichnungen Ausführungsbeispiele der Erfindung näher erläutert:

Es zeigen:
- Fig. 1: ein erstes Ausführungsbeispiel eines Bremsbackensatzes für eine Scheibenbremse, wobei die Bremsbacken zur Veranschaulichung um 90° nach außen in die Zeichungsebene umgeklappt sind,
- Fig. 2: eine kolbenseitige Bremsbacke,
- Fig. 3: die zu Fig. 2 komplementäre faustseitige Bremsbacke,
- Fign.4 und 5: weitere Ausführungsbeispiele der Erfindung.

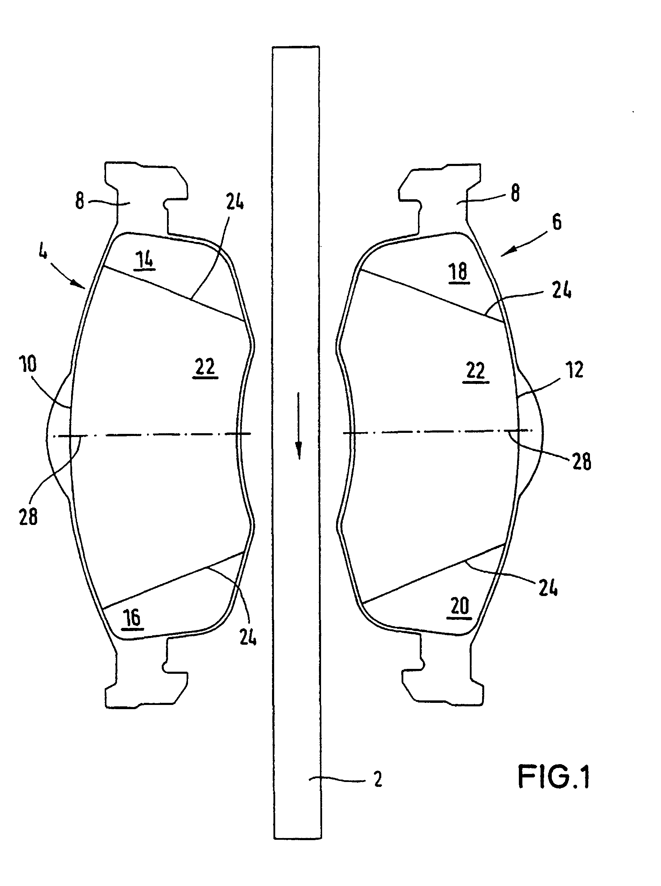

In Fig. 1 ist zwischen den Bremsbacken 4,6 die in Fahrbetrieb rotierende Bremsscheibe 2 angeordnet. Zur Veranschaulichung der Reibbelagoberfläche sind die Bremsbacken 4,6 aus ihrer normalerweise parallel zu der Bremsscheibe 2 verlaufenden Position nach außen um 90° umgeklappt.

Der Reibbelag jeder Bremsbacke 4,6 weist einen mittleren Bereich 22 mit gleichbleibender Schichtstärke oder mit geringfügig sich in Auslaufrichtung der Bremsbacke verringernder Schichtstärke auf. Eine solche in den Zeichnungen nicht dargestellte leicht schräg verlaufende Reibbelagoberfläche im mittleren Bereich 22 vermeidet Reibungsquietschen durch eine Druckpunktverlagerung. Die Reibbelagschichten 10,12 weisen an den Enden der Bremsbacken 4,6 Bereiche vermindeter Schichtstärke 14,16,18,20 auf, die bezogen auf eine längs der Bremsscheibe 2 verlaufende Spiegelungsebene nicht spiegelsymmetrisch in den Bremsbacken 4,6 angeordnet sind. Dadurch wird die Selbsterregung von Bremsschwingungen insbesondere Schwingungen im Frequenzbereich von ca. 20 bis 150 Hz vermieden. Die Schrägflächen an den sich gegenüberliegenden Reibbelägen sind demzufolge unterschiedlich angeordnet und vermeiden dadurch eine regelmäßige Riefenbildung auf der Bremsscheibe 2, wie sie bei spiegelbildlich gleicher Anordnung der Reibbeläge auftreten würde. Die als Bremsenknarzen bekannten Slipstickeffekte bei gleichzeitiger Verkantung der Reibbeläge bei niedrigen Fahrzeuggeschwindigkeiten werden dadurch zuverlässig vermieden.

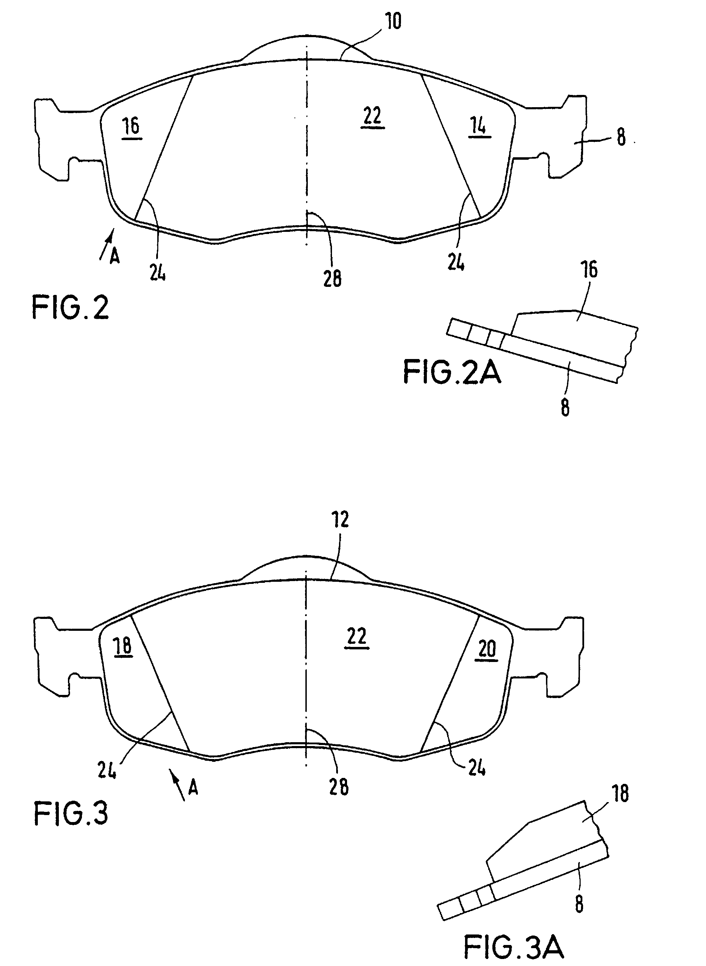

Die Fign. 2 und 3 zeigen eine Bremsbackenpaarung, wobei Fig. 2 die kolbenseitige Bremsbacke und Fig. 3 die faustseitige Bremsbacke zeigt. In dem Ausführungsbeispiel verläuft die Abschrägung der Bereich verminderter Schichtstärke unter einem Winkel von 20° zur Reibbelagoberfläche im mittleren Bereich 22 bzw. zur Trägerplatte 8. Diese Abschrägung der Bereiche 14,16,18,20 können in einem Winkelbereich zwischen ca. 10 und 45° verlaufen. Die Trennungslinie zwischen dem mittleren Bereich 22 der Reibbelagschichten 10,12 und den Bereich verminderter Schichtstärke verläuft unter einem Winkel ca. ± 22° zur radialen Symmetrielinie 28 der Bremsbacken 4,6. Die Trennungslinie kann auch in einem Winkelbereich von ± 0 bis 60°, vorzugsweise ± 10 bis 30°, verlaufen.

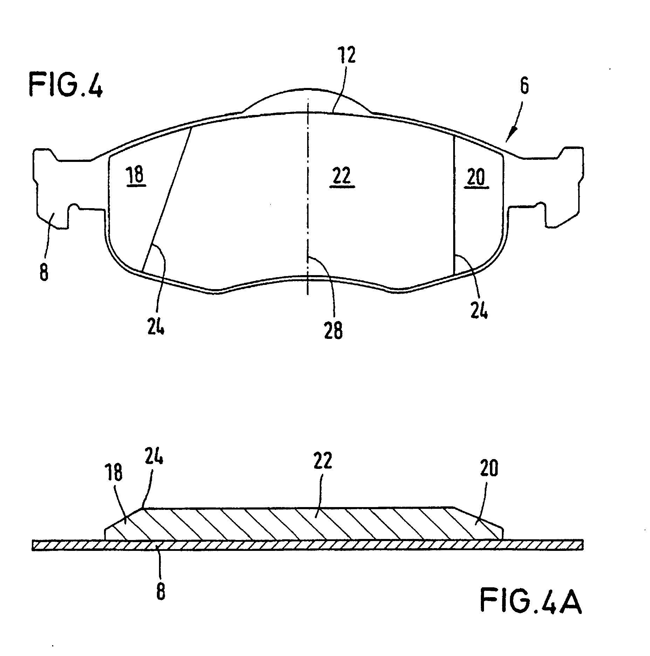

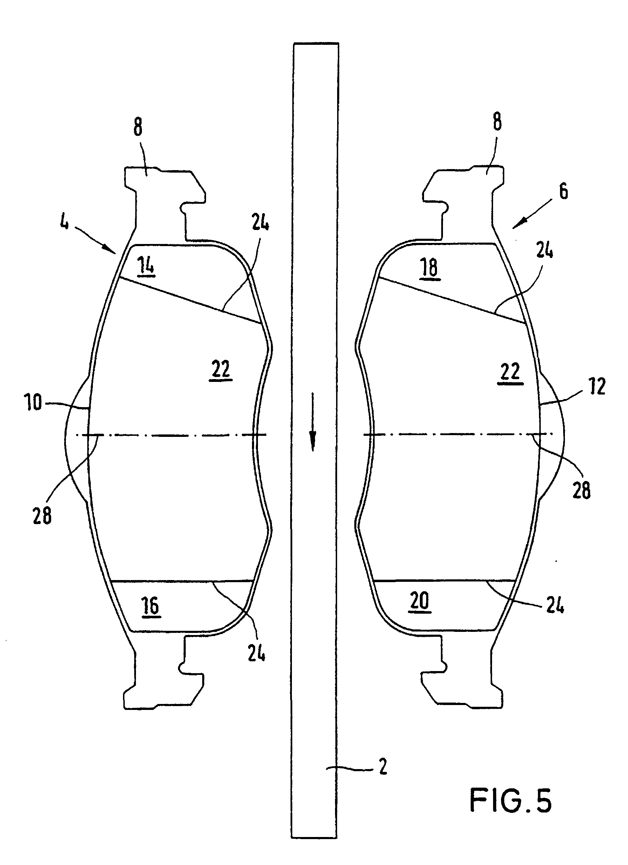

Fig. 4 zeigt ein alternatives Ausführungsbeispiel einer faustseitigen Bremsbacke, einen Schnitt entlang einer zu der Symmetrielinie 28 orthogonal verlaufenden Schnittlinie und Fig. 5 eine schematische Darstellung der Bremsbackenpaarung gemäß Fig. 4 in einer Darstellung ähnlich Fig. 1.

## Patentansprüche

1. Bremsbackensatz für eine Scheibenbremse, aus zwei gegenüberliegend und beiderseits einer Bremsscheibe (2) angeordneten Bremsbacken (4,6), die zum Bremsen an die Bremsscheibe (2) anpressbar sind, bei dem die Bremsbacken (4,6) aus einer Trägerplatte (8) und einer darauf angeordneten Reibbelagschicht (10,12) bestehen und die Reibbelagschichten (10,12) einen mittleren Bereich (22) gleicher Schichtstärke und an mindestens einem Ende der Bremsbacken (4,6) in Tangentialrichtung der Bremsscheibe (2) einen Bereich (14,16,18,20) verminderter Schichtstärke aufweisen, wodurch Trennungslinien (24) zwischen dem mittleren Bereich (22) und dem mindestens einen Bereich (14, 16,18,20) verminderter Schichtstärke gebildet sind,
**dadurch gekennzeichnet,**
**dass** zum Vermeiden niederfrequenter Schwingungen bis 150 Hz die beiderseits der Bremsscheibe (2) angeordneten Bremsbacken (4,6) hinsichtlich der Bereiche (14,16,18,20) verminderter Schichtstärke der sich gegenüberliegenden Reibbelagschichten (10,12) relativ zur Bremsscheibe (2) nicht spiegelsymmetrisch angeordnet sind, und dass die mindestens zwei gegenüberliegenden Trennungslinien (24) der sich beiderseits der Bremsscheibe gegenüberliegenden Bremsbacken (4,6) nicht spiegelsymmetrisch orientiert sind.

2. Bremsbackensatz nach Anspruch 1, **dadurch gekennzeichnet, dass** die Oberflächen der Bereiche (14,16,18, 20) verminderter Schichtstärke unter einem Winkel von ca. 10 bis 45° nach außen tangential in Richtung auf die Trägerplatten (8) abfallend verlaufen.

3. Bremsbackensatz nach Anspruch 1 oder 2, **dadurch gekennzeichnet, dass** jede Bremsbacke (4,6) mehrere Bereiche (14,16,18,20) verminderter Schichtstärke aufweist, die beiderseits der in Radialrichtung der Bremsscheibe (2) verlaufenden Symmetrielinie (28) der jeweiligen Bremsbacke (4,6) symmetrisch angeordnet sind.

4. Bremsbackensatz nach einem der Ansprüche 1 bis 3, **dadurch gekennzeichnet, dass** die Bereiche (14,16,18,20) verminderter Schichtstärke in Tangentialrichtung der Bremsscheibe (2) an mindestens einem der Enden der Bremsbacken (4,6) angeordnet sind.

5. Bremsbackensatz nach Anspruch 4, **dadurch gekennzeichnet, dass** die Trennungslinie (24) zwischen dem mittleren Bereich (22) und dem mindestens einen Bereich (14,16,18,20) verminderter Schichtstärke unter einem Winkel von ± 0 bis 60°, vorzugsweise ± 10 bis 30°, zu der in Radialrichtung der Bremsscheibe (2) verlaufenden Symmetrielinie (28) der Bremsbacken (4,6) verläuft.

6. Bremsbackensatz nach einem der Ansprüche 1 bis 5, **dadurch gekennzeichnet, dass** die Bereiche (14,16,18,20) verminderter Schichtstärke in bezug zur Drehrichtung der Bremsscheibe (2) an dem Auslaufende (30,32) der Bremsbacken (4,6) angeordnet sind.

7. Scheibenbremse mit einem Bremsbackensatz nach einem der Ansprüche 1-6.

## Claims

1. Brake shoe set for a disk brake comprising two brake shoes (4,6) arranged opposite each other on either side of a brake disk (2) and being capable of being pressed against the brake disk (2) for braking purposes, with the braking shoes (4,6) comprising a carrier plate (8) and a friction lining layer (10,12) arranged thereupon, and the friction lining layers (10,12) comprising a central area (22) of identical layer thickness and an area (14,16,18,20) of reduced layer thickness at at least one end of the brake shoes (4,6) in tangential direction of the brake disk (2), whereby separating lines (24) between the central area (22) and the at least one area (14,16,18,20) of reduced thickness are formed,
**characterized in that**
for preventing low-frequency oscillations of up to 150 Hz the brake shoes (4,6) arranged on either side of the brake disk (2) are not arranged mirror-symmetrically relative to the brake disk (2) with regard to the areas (14,16,18,20) of reduced layer thickness of the friction lining layers (10,12) arranged opposite each other, and that the at least two separating lines (24) lying opposite each other of the two brake shoes (4,6) arranged opposite each other on either side of the brake disk are not mirror-symmetrically oriented.

2. Brake shoe set according to claim 1, **characterized in that** the surfaces of the areas (14,16,18,20) of reduced layer thickness extend to the outside tangentially towards the carrier plate (8) in downward direction at an angle of approximately 10 to 45°.

3. Brake shoe set according to claim 1 or 2, **characterized in that** each brake shoe (4,6) comprises a plurality of areas (14,16,18,20) of reduced layer thickness which are arranged symmetrically on either side of the symmetrically bisecting line (28) of the respective brake shoe (4,6) extending in radial direction of the brake disk (2).

4. Brake shoe set according to one of claims 1 to 3, **characterized in that** the areas (14,16,18,20) of reduced layer thickness are arranged in tangential direction of the brake disk (2) at at least one end of the brake shoes (4,6).

5. Brake shoe set according to claim 4, **characterized in that** the separating line (24) between the central area (22) and the at least one area (14,16,18,20) of reduced layer thickness extends at an angle of ± 0 to 60°, preferably ± 10 to 30°, to the bisecting line (28) of the brake shoes (4,6) extending in radial direction of the brake disk (2).

6. Brake shoe set according to one of claims 1 to 5, **characterized in that** the areas (14,16,18,20) of reduced layer thickness are arranged at the outlet end (30,32) of the brake shoes (4,6) relatively to the direction of rotation of the brake disk (2).

7. Disk brake comprising a brake set according to one of claims 1-6.

## Revendications

1. Jeu de segments de frein pour un frein à disque, constitué de deux segments de frein (4, 6) disposés en se faisant face et de part et d'autre d'un disque de frein (2), segments qui peuvent être pressés contre le disque de frein (2) pour le freinage, jeu dans lequel les segments de frein (4, 6) se composent d' une plaque support (8) et d'une couche de garniture de friction (10, 12) disposée sur la plaque support, et les couches de garniture de friction (10, 12) présentent une région moyenne (22) d'épaisseur de couche uniforme et, à au moins une extrémité des segments de frein (4, 6) suivant une direction tangentielle du disque de frein (2), une région (14, 16, 18, 20) de moindre épaisseur de couche de sorte que des lignes de séparation (24) sont formées entre la région moyenne (22) et la (les) région(s) (14, 16, 18, 20) de moindre épaisseur de couche,
**caractérisé en ce que**, pour éviter des vibrations de basse fréquence jusqu'à 150 Hz, les segments de frein (4, 6) placés de part et d'autre du disque de frein (2) sont disposés de façon non symétrique par rapport au disque de frein (2) concernant les régions (14, 16, 18, 20) de moindre épaisseur des couches de garniture de friction (10, 12) se faisant face, et **en ce que** les lignes de séparation (24) se faisant face au nombre de deux au moins, des segments de frein (4, 6) se faisant face de part et d'autre du disque de frein, sont orientées de façon non symétrique.

2. Jeu de segments de frein selon la revendication 1, **caractérisé en ce que** les surfaces des régions (14, 16, 18, 20) de moindre épaisseur de couche s'étendent vers l'extérieur suivant une direction tangentielle en étant inclinées d'un angle de 10 à 45° environ en direction des plaques supports (8).

3. Jeu de segments de frein selon la revendication 1 ou 2, **caractérisé en ce que** chaque segment de frein (4, 6) présente plusieurs régions (14, 16, 18, 20) de moindre épaisseur de couche qui sont disposées symétriquement de part et d'autre de la ligne de symétrie (28), s'étendant dans une direction radiale du disque de frein (2), du segment de frein (4, 6) respectif.

4. Jeu de segments de frein selon l'une des revendications 1 à 3, **caractérisé en ce que** les régions (14, 16, 18, 20) de moindre épaisseur de couche sont disposées suivant une direction tangentielle du disque de frein (2) à au moins une des extrémités des segments de frein (4, 6).

5. Jeu de segments de frein selon la revendication 4, **caractérisé en ce que** la ligne de séparation (24) entre la région moyenne (22) et la (les) région(s) (14, 16, 18, 20) de moindre épaisseur de couche s'étend suivant un angle de ± 0 à 60°, de préférence de ± 10 à 30°, par rapport à la ligne de symétrie (28), s'étendant dans une direction radiale du disque de frein (2), des segments de frein (4, 6).

6. Jeu de segments de frein selon l'une des revendications 1 à 5, **caractérisé en ce que** les régions (14, 16, 18, 20) de moindre épaisseur de couche sont disposées, relativement au sens de rotation du disque de frein (2), à l'extrémité de sortie (30, 32) des segments de frein (4, 6).

7. Frein à disque comportant un jeu de segments de frein selon l'une des revendications 1 à 6.
